# EUROPEAN PATENT APPLICATION

(11) **EP 2 039 496 A1**
(43) Date of publication of application: **25.03.2009**
(21) Application number: 07116865.2
(22) Date of filing: 20.09.2007
(51) Int. Cl.: B29C 70/58

(54) **A method of producing a rubber product**

(71) Applicant: ABB Research Ltd., 8050 Zürich (CH)
(72) Inventor: Jonsson, Erik, 752 40 Uppsala (SE); Palmqvist, Lars I., 441 30 Alingsas (SE)
(74) Representative: Fröderberg, Anders Oskar

(57) **Abstract**

A method of producing a rubber product, comprising the step of: moulding a material that will vulcanize and thereby form said rubber product, wherein said vulcanisation is a thermally activated vulcanisation. The method comprises a further step of mixing with said material a plurality of compressible, hollow particles, each of which comprises a polymer shell.

## Description

### TECHNICAL FIELD

The present invention relates to a method of producing a rubber product, comprising the step of: moulding a material that will vulcanize and thereby form said rubber product, wherein said vulcanisation is a thermally activated vulcanisation.

"Thermally activated vulcanisation" as referred to herein will indicate a method in which heat is actively added to or transferred to the material to be vulcanized, wherein said material, as a consequence of the subsequent temperature rise thereof, will vulcanize to form said rubber product. Typically, the temperature of said material is increased, through said provision of heat, up to above 120°C, preferably above 140 °C. A preferred temperature range for the vulcanisation might be 160-200 °C, preferably, 160-170 °C.

The invention is particularly suited for the production of components for electric insulation systems, in particular electrically insulating components (though electrically conducting components may also be conceived). Typically, such components may include electric cable accessories, in particular those used in medium and high voltage applications, i.e. in applications in which the components might be subjected to and aimed for insulation of medium and high voltages. Medium and high voltages may be referred to as voltages from approximately 1 kV and above.

### BACKGROUND OF THE INVENTION

In the production of EPDM products problems arise due to the thermal expansion of the material in the mould during the vulcanisation. The vulcanisation is thermally activated and, hence, there will be a substantial temperature rise for the rubber material introduced into the mould during the moulding process. The difficulty is to fill the mould with exactly the right amount of rubber material. Too much rubber will result in the mould parts being pushed apart due to the thermal expansion, and will also result in a less perfect vulcanisation. Too little rubber in the mould, on the other hand, will result in the generation of voids in the rubber product or result in the vulcanised material being unable to fill up the mould totally after completion of the vulcanisation. Accordingly, this will result in a geometrical default of the finished product. Both these phenomena also result in difficulties when designing the mould, since consideration thereto must be taken.

### THE OBJECT OF THE INVENTION

It is an object of the present invention to present a method by means of which the above disadvantages of prior art are remedied.

Accordingly it is an object of the present invention to present a method by means of which the determination of the correct amount of rubber material to be introduced into a mould will be facilitated. The invention also aims at facilitating the designing of the mould, since it will make the final result of the moulding process less sensitive to the fact that the rubber material will undergo a certain degree of thermal expansion during the vulcanisation thereof.

It is an object of the invention to present a method by which the pressure to which the mould is subjected during vulcanisation of the rubber material is depressed in comparison to prior art for those cases when the vulcanising material fully fills the mould.

### SUMMARY OF THE INVENTION

The object of the present invention is achieved by means of the initially defined method, characterised in that it comprises a further step of mixing with said material a plurality of compressible, hollow particles, each of which comprises a polymer shell. The compressible hollow particles may, preferably, be filled with a gas, or gas mixture, e.g. air. Thanks to the presence of the compressible particles, a sufficient amount of rubber material, forming a mixture with said particles, may be introduced into the mould in order to guarantee that no voids affecting the geometrical shape of the final product will be generated. Upon thermal expansion of the surrounding rubber material, the compressible particles will undergo compression, and will, if added to a sufficient degree, guarantee that the vulcanising material will not put too much pressure on the surrounding mould structure. It should be noted that the shells of said particles should be continuous, in order to seal the hollow interior of said particles from the surrounding rubber material. Preferably, It should also prevent gas from leaking out through said shells to the surrounding material, at least up to a certain point during the vulcanisation process. Preferably, the hollow particles are mixed with the rubber material before the introduction thereof into the mould.

According to a preferred embodiment said particles are evenly distributed in said material. The even distribution of the particles should remain up to the point when a fixed structure is generated due to the vulcanisation process. An agglomeration of particles might be detrimental to the mechanical properties of the final product. Agglomerations might also effect the geometric shape as well as the electric insulation properties of the final product negatively. Should there be regions in which there are no or only too small amounts of said particles, such regions may be unable of compensating the thermal expansion of the rubber material, and may, accordingly, cause unwanted pressure on the moulding structure and an unwanted effect on the vulcanisation process. Therefore, an even distribution of said particles is preferred.

Preferably, the method of the invention comprises the use of a shell material, i.e. said polymer, of such properties that said particles remain intact at least up to a point, i.e. a pressure and a temperature, at which the vulcanised material is able to fix the structure in which said particles are distributed. Here, "intact" is referred to as still presenting a sealed enclosure of the interior space thereof (however, the geometrical shapes or the sizes of the individual particles may have changed due to compression thereof). After such a fixing of the structure has taken place, the necessity of having intact shells may not be that important any longer, since then, the structure itself will be able to prevent the gas from moving through the latter and affect the properties of the product, for example by agglomeration and associated affection of the electric insulation properties. However, the invention is not restricted to the use of shells that do collapse or burst after said fixing of the structure, but may as well include the use of a shell material that stays intact also in the final product and during the use of the product. As the matter of fact, such a material might be preferred in many cases.

Accordingly, it is preferred that said polymer of said polymer shells has a melting temperature above the temperature at which vulcanisation of said material is initiated. Preferably, the polymer of said shells has a melting temperature equal to or above the maximum temperature of the rubber material during the moulding process, in particular during the vulcanisation process.

It is also preferred that said polymer shells have such a thickness such that they do not collapse or burst under the maximum pressure that they are subjected to during the moulding process. The toughness of the shell material must be low enough to permit a substantial compression of the shells without any cracking or bursting thereof. It is preferred that the shells should permit a full, i.e. 100%, compression of the interior of the particles without any cracking or bursting thereof. Preferably, the shells have a mechanical strength high enough to withstand the pressures that they are subjected to during mixing with the mixture of rubber material without any substantial compression, i.e. diminishing, of said particles. On the other hand, the mechanical strength of the shells, and the pressure in the hollow space inside them, should be low enough to permit substantial compression of said particles during the vulcanisation process. At least, the compression that said particles are subjected to during the vulcanisation process should be higher than any prevailing compression that they are subjected to during mixing thereof with the rubber material before the vulcanisation process.

The shell material should be compatible with the surrounding rubber material, at least in the respect that it adheres thereto and does not cause voids between itself and said matrix as a result of volumetric or shape changes of the latter. Preferably, the compressible particles define micro-spheres having diameters ranging from 50 µm to 100µm. Said shells may comprise an organic polymeric material such as polyacrylonitrile, polyvinyl chlorides, polyvinyl acetates, polyesters, polycarbonates, polyethylenes, polystyrenes, polymethyl methacrylates, polyvinyl alcohols, ethylcellulose, nitrocellulose, benzylcelloluse, epoxy resins, hydroxypropylmethylcellulose phthalate, copolymers of vinyl chloride and vinyl acetate, copolymers of vinyl acetate and cellulose acetobutyrate, copolymers of styrene and maleic acid, copolymers of acrylonitrile and styrene, copolymers of vinylidene chloride and acrylonitrile and similar substances.

Examples of suitable micro-spheres are those commercially available under the trade mark Dualite TM by Pierce and Stephens Corp., and those sold under the trade mark Expancel TM by Akzo Nobel.

According to a preferred embodiment said particles are added to such an amount that a mixture of said material and particles has a volumetric percentage of said particles that is below or equal to 25 vol.%. Should the volumetric percentage be above such a level, the negative effect thereof on the electric insulation capacity of the product might be unacceptable. Moreover, there is no need of having excessive compression capability induced by means of an excessive amount of said particles, since the thermal expansion of the rubber material will be limited in any case.

According to a preferred embodiment, the minimum amount of said particles in mixture with said rubber material should be such that they will be able to compensate, by means of their compression, for the thermal expansion presented by the rubber material in connection to the rising of the temperature of said mixture up to the vulcanisation temperature or the maximum temperature of the moulding process, i.e. from the temperature that the mixture presents at the introduction thereof into the mould up to said maximum temperature of the moulding process. Thereby, it will be possible to fill the mould completely with said mixture, whereby all the thermal expansion of the rubber material during the subsequent vulcanisation is compensated by a corresponding compression of the volume occupied by said particles within the matrix of rubber material. Accordingly, the invention may include the step of filling the mould completely with a mixture of said rubber material and said particles, as well as a subsequent step of adding heat to the mixture in order to initiate and complete the vulcanisation process.

Preferably, said particles are added to such an amount that a mixture of said material and particles comprises at least 5 vol.% of said particles.

According to a preferred embodiment mean volume of said particles should be equal to or above that corresponding to a sphere of a diameter of approximately 10 µm. It is assumed that, for the particles introduced into the rubber material, the size distribution is fairly even or follows a normal distribution. Even smaller particle volumes would result in difficulties in producing shells of such a thickness that any compression of the particles would be possible with the relevant pressures used and, still, without any bursting of the shell.

Preferably, the mean volume of said particles is equal to or below that corresponding to a sphere of a diameter of approximately 300 µm. Larger particle sizes might result in the upcoming of partial discharges within said particles during use of such a moulded product as an electric insulation in medium or high voltage applications, and also in poor mechanical properties of said particles. A preferred volumetric range of each particle, would be from a volume corresponding to a sphere with a diameter of approximately 30 µm up to a volume corresponding to that of sphere of a diameter of approximately 100 µm. Preferably, in an uncompressed condition, the volume of the shell material of said particles is smaller, preferably substantially smaller, than the volume of the interior hollow space enclosed by said shells. Since the shell material in itself is generally unable of being compressed, the volume thereof should be kept at a minimum in relation the initial volume of the space enclosed thereby.

According to a preferred embodiment said material, i.e. the rubber material, comprises EPDM, since this is a material which has properties that makes it suitable as electrically insulating components in electric insulation systems, especially in medium and high voltage applications. As an alternative to EPDM a silicone rubber material might also be conceived.

An example of the inventive method will now be presented.

### EXAMPLE

20 vol.% of Expancel (trademark) micro spheres produced by Akzo Nobel was compounded in EPDM in a shear mixer. Expancel comprises particles formed by small spheres formed by polymeric shells filled with gas. Theses spheres are small enough and have a sufficient wall thickness, i.e. the thickness of the polymeric shells, to guarantee that they will not collapse during a subsequent vulcanisation step.

The mixture was introduced into a mould, and heat was added to the mould and to the mixture in order to initiate a vulcanisation process. The mixture was let to vulcanise completely, whereupon the mould was opened, the moulded body was taken out and was permitted to cool. During the vulcanisation, the pressure from the vulcanising material onto the surrounding mould structure was found to be substantially lower than for a comparative experiment in which no Expancel micro spheres had been added to the EPDM. Accordingly, thermal expansion of the EPDM during the vulcanisation thereof must have been compensated by a compression of said Expancel micro spheres.

Samples of the moulded body were taken and subjected to a microscope investigation. This investigation revealed that the Expancel micro spheres had survived both the mixing process and the vulcanisation process without having collapsed or being torn apart. However, a certain compression thereof could be noted, indicating that a volumetric compensation of the thermal expansion of the rubber material had taken place as a result of the inventive method.

## Claims

1. A method of producing a rubber product, comprising the step of: moulding a material that will vulcanize and thereby form said rubber product, wherein said vulcanisation is a thermally activated vulcanisation, **characterised in that** it comprises a further step of mixing with said material a plurality of compressible, hollow particles, each of which comprises a polymer shell.

2. A method according to claim 1, **characterised in that** said particles are evenly distributed in said material.

3. A method according to claim 1 or 2, **characterised in that** it comprises the use of a shell material of such properties that said particles remain intact at least up to a point when the vulcanised material is able to fix the structure in which said particles are distributed.

4. A method according to any one of claims 1-3, **characterised in that** said polymer of said polymer shells has a melting temperature above the temperature at which vulcanisation of said material is initiated.

5. A method according to any one of claims 1-4, **characterised in that** said polymer shells have such a thickness such that they do not collapse under the maximum pressure that they are subjected to during the moulding process.

6. A method according to any one of claims 1-5, **characterised in that** said particles are added to such an amount that a mixture of said material and particles has a volumetric percentage of said particles that is below or equal to 25 vol.%.

7. A method according to any one of claims 1-6, **characterised in that** the minimum amount of said particles in mixture with said rubber material should be such that they will be able to compensate, by means of their compression, for the thermal expansion presented by the rubber material in connection to the rising of the temperature of said mixture up to the vulcanisation temperature or the maximum temperature of the moulding process.

8. A method according to any one of claims 1-7, **characterised in that** said particles are added to such an amount that a mixture of said material and particles comprises at least 5 vol.% of said particles.

9. A method according to any one of claims 1-8, **characterised in that** said material comprises EPDM.

10. A method according to any one of claims 1-9, **characterised in that** it is a method for the production of a component of an electric insulation system.

11. A method according to any one of claims 1-10, **characterised in that** it is a method for the production of an electrically insulation component in an electric insulation system.

12. A method according to claim 10 or 11, **characterised in that** said component is a cable accessory.

13. A method according to any one of claims 10-12, **characterised in that** said component is a component that will be subjected to medium or high voltage during use thereof.
